# EUROPEAN PATENT APPLICATION

(11) **EP 2 822 073 A1**
(43) Date of publication of application: **07.01.2015**
(21) Application number: 13755181.8
(22) Date of filing: 28.02.2013
(51) Int. Cl.: H01M 8/04, H01M 8/10

(54) **FUEL CELL SYSTEM AND CONTROL METHOD FOR FUEL CELL SYSTEM**

(30) Priority: 29.02.2012 JP 2012043879
(71) Applicant: Nissan Motor Co., Ltd, Yokohama-shi, Kanagawa 221-0023 (JP)
(72) Inventor: ICHIKAWA, Yasushi, Atsugi-shi Kanagawa 243-0123 (JP); FUJII, Takahiro, Atsugi-shi Kanagawa 243-0123 (JP); IKEZOE, Keigo, Atsugi-shi Kanagawa 243-0123 (JP); FUKUNAKA, Atsushi, Atsugi-shi Kanagawa 243-0123 (JP); ISHIKAWA, Tatsuro, Atsugi-shi Kanagawa 243-0123 (JP)
(74) Representative: Grünecker, Kinkeldey, Stockmair & Schwanhäusser
(86) International application number: PCT/JP2013/055348
(87) International publication number: WO 2013/129553

(57) **Abstract**

A fuel cell system includes a pressure regulating valve configured to control a pressure of an anode gas to be supplied to a fuel cell, a pulsation operation control means configured to control such that the anode gas pressure becomes higher as a load becomes larger, and the anode gas pressure is pulsated at the same load, and an anode gas pressure limiting means configured to limit the anode gas pressure by a pressure higher than the anode gas pressure according to the load when the load lowers.

## Description

### TECHNICAL FIELD

The present invention relates to a fuel cell system and a control method of a fuel cell system.

### BACKGROUND ART

A fuel cell system in which a normally-closed solenoid valve is provided in an anode gas supply passage and a normally-open solenoid valve and a recycle tank (buffer tank) are provided in order from an upstream in an anode-gas discharge passage has been known (see JP2007-517369A). This fuel cell system is an anode gas non-circulating type fuel cell system in which an unused anode gas discharged into the anode-gas discharge passage is not returned to the anode gas supply passage, and the normally-closed solenoid valve and the normally-open solenoid valve are periodically opened/closed. As a result, impurities generated by a pulsation operation from a power generation region are pushed into the buffer tank, and hydrogen concentration of the power generation region is kept.

### SUMMARY OF INVENTION

Such fuel cell systems are known that a pressure of the anode gas is increased in accordance with a required output and the like in general. Moreover, regarding a system with weak fluidity in a stack such as a non-circulating type fuel cell system, for example, a system in which the impurities in the stack are pushed into an off-gas side by performing pulsation is known. In such fuel cell systems performing pulsation, from a state in which the required output is high and pulsation is performed while a base pressure of anode is high, if the required output becomes lower and the required anode pressure becomes smaller with that, the following nonconformity occurs. If a required value of the anode gas pressure lowers, a pressure regulating valve is controlled so that the anode gas pressure becomes the required value. More specifically, the pressure regulating valve is closed by feedback control of the pressure, and hydrogen is consumed in accordance with the output at that time. At this time, since the pressure in the power generation region lowers more than the pressure on the off-gas side of the fuel cell system, it was found that, since the gas containing the impurities on the off-gas side flows backward, a point where the anode gas concentration is locally low is generated in an anode-gas channel in the fuel cell. If power generation is continued in this state, the anode gas required for a reaction runs short, and it was found that power generation efficiency deteriorates.

The present invention has an object to provide a technology for suppressing the lowering of anode gas concentration inside the fuel cell when the pressure of the anode gas is to be lowered.

A fuel cell system in an embodiment includes a pressure regulating valve configured to control a pressure of an anode gas to be supplied to a fuel cell, a pulsation operation control means configured to control such that the anode gas pressure becomes higher as a load becomes larger, and the anode gas pressure is pulsated at the same load, and an anode gas pressure limiting means configured to limit the anode gas pressure by a pressure higher than the anode gas pressure according to the load when the load lowers.

Embodiments of the present invention and merits of the present invention will be described below in detail together with the attached drawings.

### BRIEF DESCRIPTION OF DRAWINGS

[Fig. 1A] Fig. 1A is a diagram for explaining a configuration of a fuel cell system in a first embodiment and is a perspective view of a fuel cell.
[Fig. 1B] Fig. 1B is a diagram for explaining a configuration of a fuel cell system in the first embodiment and is a 1B-1B sectional view of the fuel cell in Fig. 1A.
[Fig. 2] Fig. 2 is an outline configuration diagram of an anode gas non-circulating type fuel cell system in the first embodiment.
[Fig. 3] Fig. 3 is a diagram for explaining a pulsation operation in a steady operation in which an operation state of the fuel cell system is constant.
[Fig. 4] Fig. 4 is a flowchart of pulsation operation control.
[Fig. 5] Fig. 5 is a time chart illustrating a change of an anode pressure in which a pressure regulating valve is fully closed during a descending transition operation so as to lower the anode pressure to a lower limit pressure.
[Fig. 6] Fig. 6 is a diagram for explaining a reason why a portion in which anode gas concentration is locally lower than the other portions inside an anode gas channel is generated.
[Fig. 7] Fig. 7 is a flowchart of purge control executed by a controller.
[Fig. 8] Fig. 8 is a diagram illustrating a relationship between a temperature and humidity of the fuel cell stack and a permeation amount of nitrogen.
[Fig. 9] Fig. 9 is a flowchart of anode pressure control executed by the fuel cell system in the first embodiment.
[Fig. 10] Fig. 10 is a diagram illustrating an example of temporal changes of an anode pressure and a cathode pressure when the anode pressure control is executed by the fuel cell system in the first embodiment.
[Fig. 11] Fig. 11 is a diagram illustrating an example of the temporal change of the anode pressure when the anode pressure control is executed by the fuel cell system in a second embodiment.

### DESCRIPTION OF EMBODIMENTS

### - First embodiment -

A fuel cell generates power by sandwiching an electrolytic membrane by an anode electrode (fuel electrode) and a cathode electrode (oxidizer electrode) and by supplying an anode gas (fuel gas) containing hydrogen to the anode electrode and a cathode gas (oxidizer gas) containing oxygen to the cathode electrode. Electrode reactions progressing at both electrodes of the anode electrode and the cathode electrode are as follows:

Anode electrode: 2H₂ -> 4H⁺ + 4e- (1)

Cathode electrode: 4H⁺ + 4e⁻ + O₂ → 2H₂O (2)

By means of the electrode reactions in the formula (1) and the formula (2), the fuel cell generates an electromotive force at approximately 1 volt.

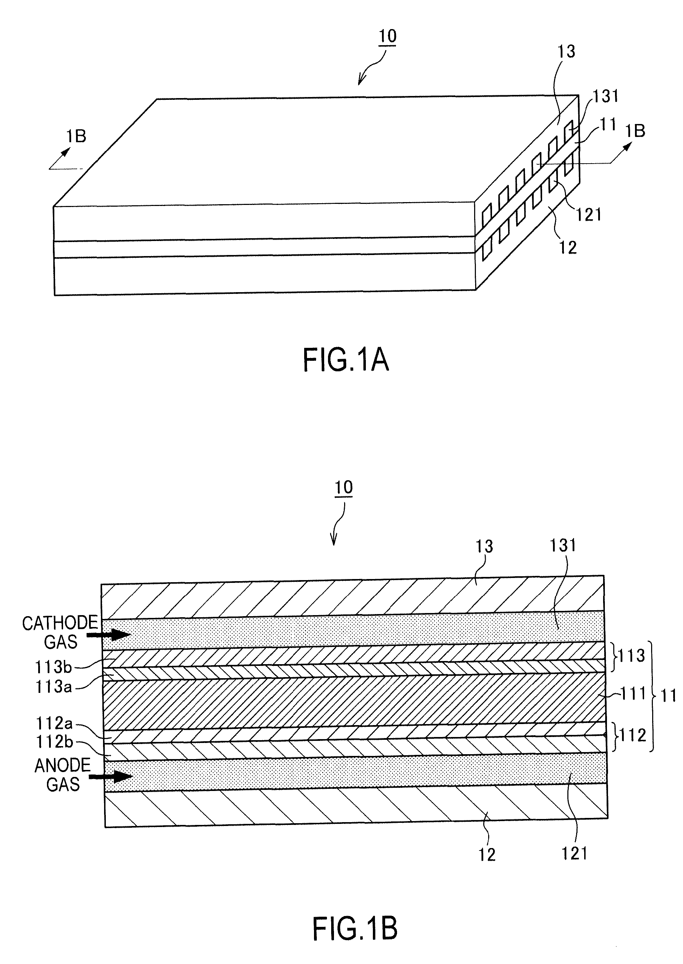

Figs. 1A and 1B are diagrams for explaining a configuration of a fuel cell system in a first embodiment. Fig. 1A is a perspective view of the fuel cell 10. Fig. 1B is a 1B-1B sectional view of the fuel cell in Fig. 1A.

The fuel cell 10 is composed by arranging an anode separator 12 and a cathode separator 13 on both front and back surfaces of a membrane electrode assembly (hereinafter referred to as an "MEA") 11.

The MEA 11 is provided with an electrolyte membrane 111, an anode electrode 112, and a cathode electrode 113. The MEA 11 has the anode electrode 112 on one of surfaces of the electrolyte membrane 111 and the cathode electrode 113 on the other surface.

The electrolyte membrane 111 is a proton conductive ion exchange membrane formed of a fluorine resin. The electrolyte membrane 111 shows a favorable electric conductivity in a wet state.

The anode electrode 112 is provided with a catalyst layer 112a and a gas diffusion layer 112b. The catalyst layer 112a is in contact with the electrolyte membrane 111. The catalyst layer 112a is formed of platinum or a carbon black particle supporting platinum or the like. The gas diffusion layer 112b is provided on an outer side (a side opposite to the electrolyte membrane 111) of the catalyst layer 112a and is in contact with the anode separator 12. The gas diffusion layer 112b is formed of a member having a sufficient gas diffusion characteristic and electric conductivity and is formed of a carbon cloth formed by weaving fibers made of a carbon fiber, for example.

The cathode electrode 113 is also provided with a catalyst layer 113a and a gas diffusion layer 113b similarly to the anode electrode 112.

The anode separator 12 is in contact with the gas diffusion layer 112b. The anode separator 12 has an anode gas channel 121 having a shape of a plurality of grooves for supplying the anode gas to the anode electrode 112 on a side in contact with the gas diffusion layer 112b.

The cathode separator 13 is in contact with the gas diffusion layer 113b. The cathode separator 13 has a cathode gas channel 131 having a shape of a plurality of grooves for supplying the cathode gas to the cathode electrode 113 on a side in contact with the gas diffusion layer 113b.

The anode gas flowing through the anode gas channel 121 and the cathode gas flowing through the cathode gas channel 131 flow in parallel with each other in the same direction. It may be so configured that they flow in parallel with each other in directions opposite to each other.

When such fuel cell 10 is used as a power source for a vehicle, since power in demand is large, the fuel cells 10 are used as a fuel cell stack in which several hundreds of the fuel cells 10 are laminated. Then, by constituting fuel cell system for supplying the anode gas and the cathode gas to the fuel cell stack, the power for driving a vehicle is taken out.

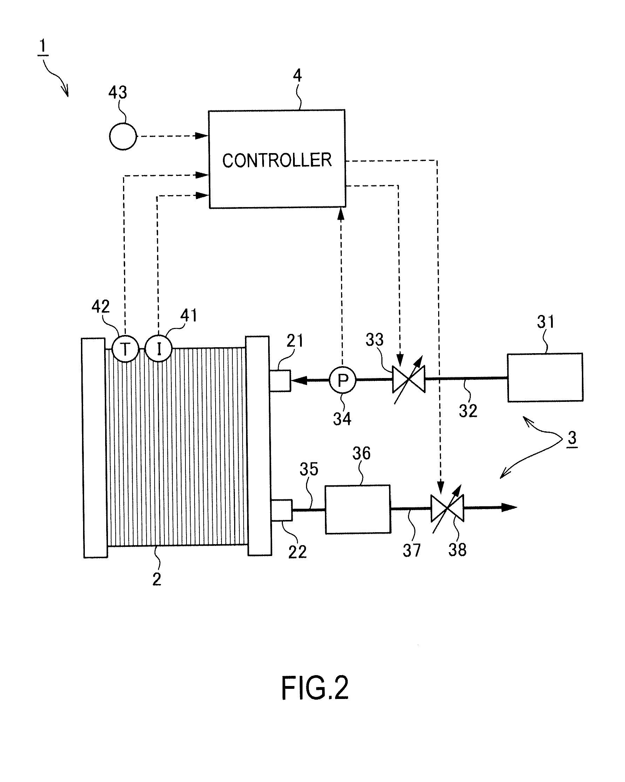

Fig. 2 is an outline configuration diagram of the anode gas non-circulating type fuel cell system in the first embodiment.

The fuel cell system 1 includes a fuel cell stack 2, an anode gas supply device 3, and a controller 4.

The fuel cell stack 2 is constructed by stacking a plurality of the fuel cells 10, and receives the supply of the anode gas and the cathode gas to generate the electric power required to drive the vehicle (for example, electric power required to drive a motor).

Regarding a cathode gas supply/discharge device for supplying/ discharging the cathode gas to the fuel cell stack 2 and a cooling device for cooling the fuel cell stack 2, since they are not major parts of the present invention, illustration is omitted for facilitation of understanding. In this embodiment, air is used as the cathode gas.

The anode gas supply device 3 is provided with a high pressure tank 31, an anode gas supply passage 32, a pressure regulating valve 33, a pressure sensor 34, an anode gas discharge passage 35, a buffer tank 36, a purge passage 37, and a purge valve 38.

The high pressure tank 31 stores the anode gas to be supplied to the fuel cell stack 2 while keeping it in a high pressure state.

The anode gas supply passage 32 is a passage for supplying the anode gas discharged from the high pressure tank 31 to the fuel cell stack 2, in which one end portion is connected to the high pressure tank 31 and the other end portion is connected to an anode gas inlet hole 21 of the fuel cell stack 2.

The pressure regulating valve 33 is provided in the anode gas supply passage 32. The pressure regulating valve 33 regulates the anode gas discharged from the high pressure tank 31 to a desired pressure and supplies it to the fuel cell stack 2. The pressure regulating valve 33 is an electromagnetic valve capable of adjusting an opening degree continuously or in steps, and the opening degree is controlled by the controller 4. The controller 4 controls the opening degree of the pressure regulating valve 33 by controlling an amount of an electric current to be supplied to the pressure regulating valve 33.

The pressure sensor 34 is provided in the anode gas supply passage 32 on a downstream from the pressure regulating valve 33. The pressure sensor 34 detects a pressure of the anode gas flowing through the anode gas supply passage 32 on the downstream from the pressure regulating valve 33. In this embodiment, the pressure of the anode gas detected by this pressure sensor 34 is used as a substitution for a pressure of an entire anode system including each of the anode gas channels 121 and the buffer tank 36 inside the fuel cell stack (hereinafter referred to as an "anode pressure").

The anode gas discharge passage 35 has one end portion connected to an anode gas outlet hole 22 of the fuel cell stack 2 and the other end portion connected to an upper part of the buffer tank 36. Into the anode gas discharge passage 35, a mixture gas of an excess anode gas not used for the electrode reaction and an impurity gas such as nitrogen, steam and the like cross-leaked from the cathode side to the anode gas channel 121 (hereinafter referred to as an "anode off-gas") is discharged.

The buffer tank 36 temporarily stores the anode off-gas having flowed through the anode gas discharge passage 35. A part of the steam in the anode off-gas condenses in the buffer tank 36 and becomes liquid water and is separated from the anode off-gas.

The purge passage 37 has one end portion connected to a lower part of the buffer tank 36. The other end portion of the purge passage 37 is an opening end. The anode off-gas and the liquid water stored in the buffer tank 36 are discharged to the outside air from the opening end through the purge passage 37.

The purge valve 38 is provided in the purge passage 37. The purge valve 38 is an electromagnetic valve capable of adjusting an opening degree continuously or in steps, and the opening degree is controlled by the controller 4. By adjusting the opening degree of the purge valve 38, an amount of the anode off-gas discharged from the buffer tank 36 to the outside air through the purge passage 37 is adjusted so that anode gas concentration in the buffer tank 36 becomes a certain level or less. That is because, if the anode gas concentration in the buffer tank 36 is too high, the anode gas amount discharged from the buffer tank 36 to the outside air through the purge passage 37 becomes too large, which is wasteful.

The controller 4 is constituted by a microcomputer provided with a central processing unit (CPU), a read-only memory (ROM), a random-access memory (RAM), and an input/output interface (I/O interface).

Into the controller 4, in addition to the above described pressure sensor 34, signals for detecting an operation state of the fuel cell system 1 such as a current sensor 41 for detecting an output current of the fuel cell stack 2, a temperature sensor 42 for detecting a temperature of cooling water for cooling the fuel cell stack 2 (hereinafter referred to as a "cooling water temperature"), an accelerator stroke sensor 43 for detecting a stepped-on amount of an accelerator pedal (hereinafter referred to as an "accelerator operation amount") and the like are inputted.

The controller 4 periodically opens/closes the pressure regulating valve 33 on the basis of these input signals and performs a pulsation operation for periodically increasing/decreasing the anode pressure and moreover, adjusts a flow rate of the anode off-gas discharged from the buffer tank 36 by adjusting the opening degree of the purge valve 38 so that the anode gas concentration in the buffer tank 36 is kept at a certain level or less.

In the case of the anode-gas non-circulating fuel cell system 1, if the anode gas is continuously supplied from the high pressure tank 31 to the fuel cell stack 2 with the pressure regulating valve 33 left open, the anode off-gas containing unused anode gas discharged from the fuel cell stack 2 is continuously discharged from the buffer tank 36 to the outside air through the purge passage 37, which is wasteful.

Thus, in this embodiment, the pressure regulating valve 33 is periodically opened/closed, and a pulsation operation for periodically increasing/decreasing the anode pressure is performed. By performing the pulsation operation, the anode off-gas stored in the buffer tank 36 can be made to flow backward to the fuel cell stack 2 during pressure reduction of the anode pressure. As a result, since the anode gas in the anode off-gas can be reused, the anode gas amount discharged to the outside air can be reduced, and a waste can be eliminated.

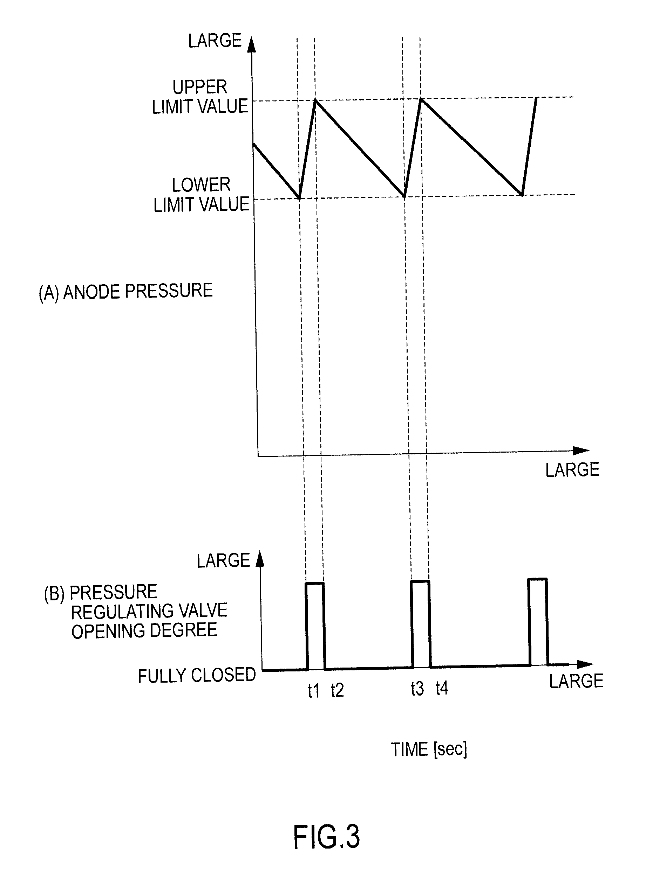

Fig. 3 is a diagram for explaining the pulsation operation in a steady operation in which the operation state of the fuel cell system 1 is constant.

As illustrated in Fig. 3(A), the controller 4 calculates a target output of the fuel cell stack 2 on the basis of the operation state (a load of the fuel cell stack) of the fuel cell system 1 and sets an upper limit value and a lower limit value of the anode pressure according to the target output. Then, the anode pressure is periodically increased/decreased between the set upper limit value and lower limit value of the anode pressure.

Specifically, if the anode pressure reaches the lower limit value at time t1, as illustrated in Fig. 3(B), the pressure regulating valve 33 is opened to an opening degree at which at least the anode pressure can be increased to the upper limit value. In this state, the anode gas is supplied from the high pressure tank 31 to the fuel cell stack 2 and is discharged to the buffer tank 36.

If the anode pressure reaches the upper limit value at time t2, as illustrated in Fig. 3(B), the pressure regulating valve 33 is fully closed, and supply of the anode gas from the high pressure tank 31 to the fuel cell stack 2 is stopped. Then, by means of the above described electrode reaction in (1), the anode gas remaining in the anode gas channel 121 in the fuel cell stack is consumed with elapse of time, the anode pressure lowers by a consumed portion of the anode gas.

Moreover, if the anode gas remaining in the anode gas channel 121 is consumed, since the pressure of the buffer tank 36 becomes higher than the pressure of the anode gas channel 121 temporarily, the anode off-gas flows backward from the buffer tank 36 to the anode gas channel 121. As a result, the anode gas remaining in the anode gas channel 121 and the anode gas in the anode off-gas having flowed backward to the anode gas channel 121 are consumed with elapse of time, and the anode pressure is further lowered.

If the anode pressure reaches the lower limit value at time t3, the pressure regulating valve 33 is opened similarly to the time t1. Then, if the anode pressure reaches the upper limit value again at time t4, the pressure regulating valve 33 is fully closed.

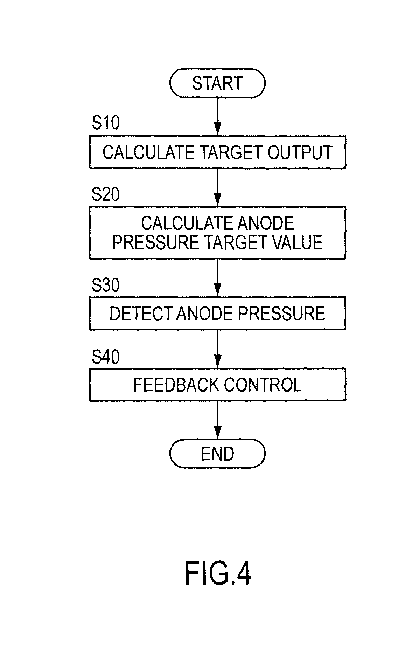

Fig. 4 is a flowchart of the pulsation operation control. Processing starting at Step S10 is executed by the controller 4.

At Step S10, on the basis of the operation state of the fuel cell system 1, the target output of the fuel cell stack 2 is calculated.

At Step S20, on the basis of the target output of the fuel cell stack 2 calculated at Step S10, the upper limit value and the lower limit value of the anode pressure during the pulsation operation are set, and on the basis of the set upper limit value and lower limit value, the anode pressure target value is determined. During an increase of the anode pressure, the upper limit value is the anode pressure target value, while during a drop of the pressure, the lower limit value is the anode pressure target value.

At Step S30, the anode pressure is detected by the pressure sensor 34.

At Step S40, on the basis of a difference between the anode pressure target value determined at Step S20 and the anode pressure detected at Step S30, feedback control for controlling opening/closing of the pressure regulating valve 33 is performed so that the anode pressure gets closer to the anode pressure target value.

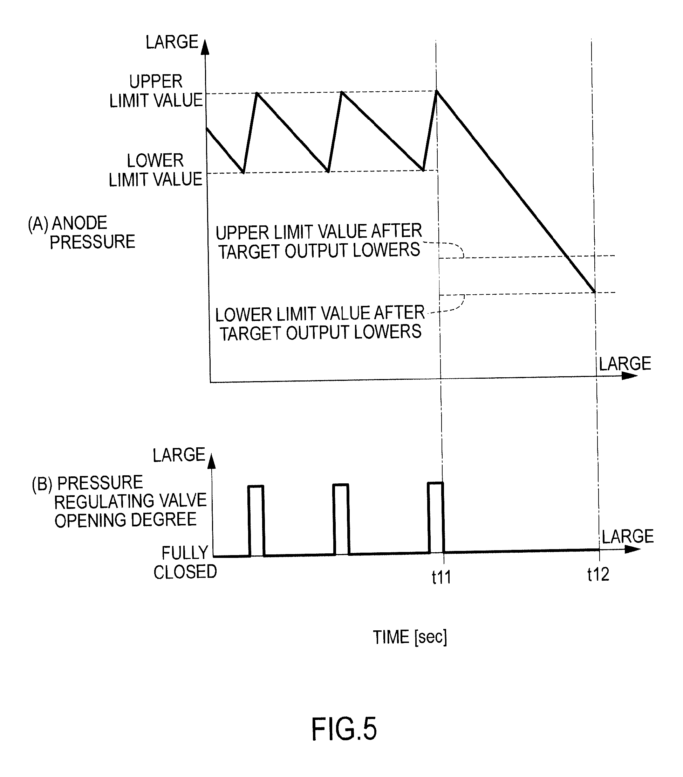

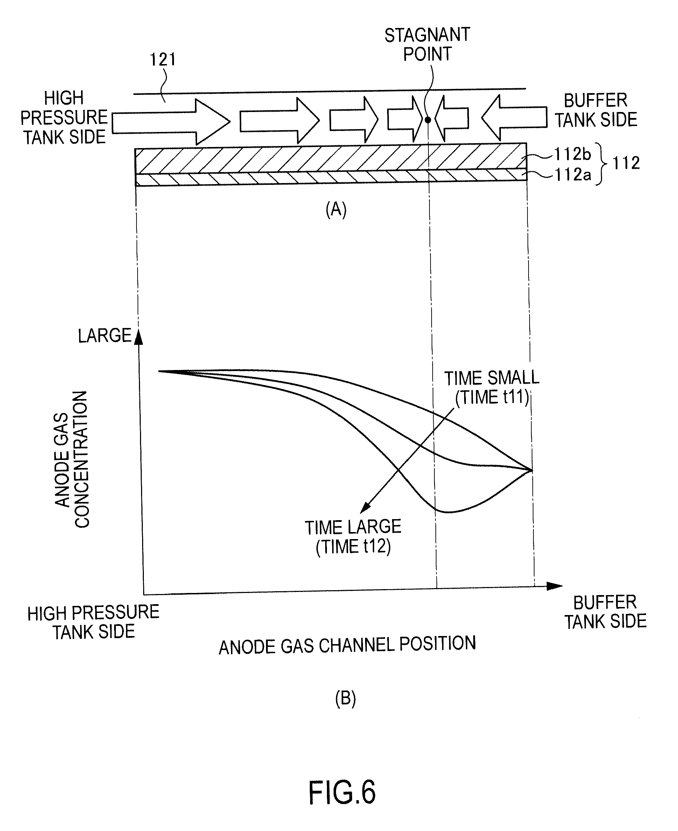

Here, when such pulsation operation is performed, if an operation state of the fuel cell system 1 changes, or more specifically, during a transition operation in which the target output of the fuel cell stack 2 decreases, and the output of the fuel cell stack 2 is decreased toward the target output (hereinafter referred to as a descending transition operation), it was found out that a portion in which the anode gas concentration is locally lower than the other portions is generated in the anode gas channel 121. This point will be described below by referring to Figs. 5 and 6.

Fig. 5 is a time chart illustrating a change of the anode pressure when the pressure regulating valve 33 is fully closed, and the anode pressure is lowered to the lower limit pressure during the descending transition operation.

If the accelerator operation amount decreases, and the target output of the fuel cell stack 2 lowers, for example, at time t11, as illustrated in Fig. 5(A), the upper limit value of the anode pressure and the lower limit pressure according to the lowered target output are set.

At this time, as illustrated in Figs. 5(A) and 5(B), if the pressure regulating valve 33 is fully closed at the time t11, and the anode pressure is lowered to the lower limit value (time t12), a portion in which the anode gas concentration is locally lower than the other portions is generated in the anode gas channel 121. This reason will be described by referring to Figs. 6.

Fig. 6 is a diagram for explaining the reason why the portion in which the anode gas concentration is locally lower than the other portions is generated in the anode gas channel 121. Fig. 6(A) is a diagram illustrating flows of the anode gas and the anode off-gas in the anode gas channel 121 when the pressure regulating valve 33 is fully closed during the descending transition operation. Fig. 6(B) is a diagram illustrating concentration distribution of the anode gas in the anode gas channel 121 in accordance with elapse of time when the pressure regulating valve 33 is fully closed during the descending transition operation.

As illustrated in Fig. 6(A), when the pressure regulating valve 33 is fully closed, the anode gas remaining in the anode gas channel 121 flows to the buffer tank 36 side by inertia. Then, when the anode gas remaining in the anode gas channel 121 is consumed, since the pressure of the buffer tank 36 temporarily becomes higher than the pressure of the anode gas channel 121, the anode off-gas flows backward from the buffer tank 36 side to the anode gas channel 121.

Then, at a merging portion of the anode gas flowing to the buffer tank 36 side in the anode gas channel 121 and the anode off-gas flowing backward from the buffer tank 36 side to the anode gas channel 121, a stagnant point where the respective gas flow velocities become zero occurs.

If such a stagnant point occurs in the anode gas channel 121, nitrogen in the anode off-gas not used for the electrode reaction described in the formula (1) collects in the vicinity of the stagnant point as time elapses. As a result, nitrogen concentration in the vicinity of the stagnant point becomes higher than the others as time elapses, and as illustrated in Fig. 6(B), the anode gas concentration in the vicinity of the stagnant point becomes lower than the others as time elapses.

As described above, after the descending transition operation, there is a stagnant point in the anode gas channel 121, and the portion in which the anode gas concentration is locally lower than the other portions is generated in the anode gas channel 121.

In the fuel cell system in this embodiment, when the target anode pressure is lowered to the target final lower limit pressure (first target anode pressure) in accordance with lowering of the target output of the fuel cell stack 2, the target anode pressure is kept at a target intermediate lower limit pressure (second target anode pressure) higher than the target final lower limit pressure for a predetermined period of time and then, it is lowered to the first target anode pressure. While the target anode pressure is kept at the target intermediate lower limit pressure for the predetermined period of time, supply of the anode gas is resumed, and purge to discharge the anode off-gas from the buffer tank 36 through the purge passage 37 is performed so that the above described portion in which the anode gas concentration is locally low is pushed out to an outside of a power generation region of the fuel cell stack 2.

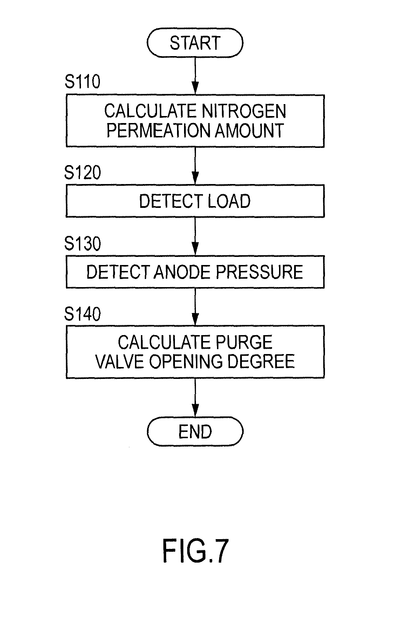

Fig. 7 is a flowchart of purge control executed by the controller 4.

At Step S110, a permeation amount of nitrogen permeated from the cathode side to the anode side through the electrolyte membrane is calculated.

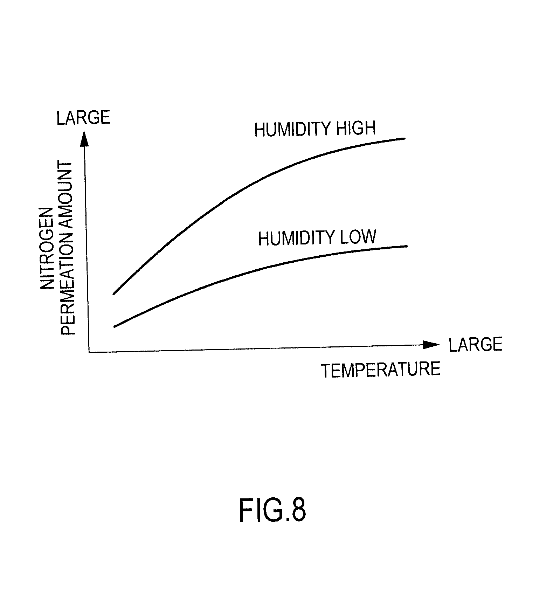

Fig. 8 is a diagram illustrating a relationship between a temperature and humidity of the fuel cell stack 2 and the permeation amount of nitrogen. As illustrated in Fig. 8, the higher the temperature of the fuel cell stack 2 is and the higher the humidity is, the larger the permeation amount of nitrogen becomes. Here, as the temperature of the fuel cell stack 2, a temperature detected by the temperature sensor 42 is used, and humidity is acquired on the basis of high frequency resistance (HFR). At Step S110, the temperature and humidity of the fuel cell stack 2 are acquired, and by referring to a table having a relationship as illustrated in Fig. 8 prepared in advance, a permeation amount of nitrogen is calculated.

At Step S120, a load connected to the fuel cell stack 2 (a target output of the fuel cell stack 2) is detected.

At Step S130, the anode pressure is detected by the pressure sensor 34.

At Step S140, on the basis of the nitrogen permeation amount calculated at Step S110, the load detected at Step S120, and the anode pressure detected at Step S130, an opening degree of the purge valve 38 required to purge nitrogen is calculated. That is, the larger the nitrogen permeation amount is, the larger the load is, and the higher the anode pressure is, the larger the opening degree of the purge valve 38 is set.

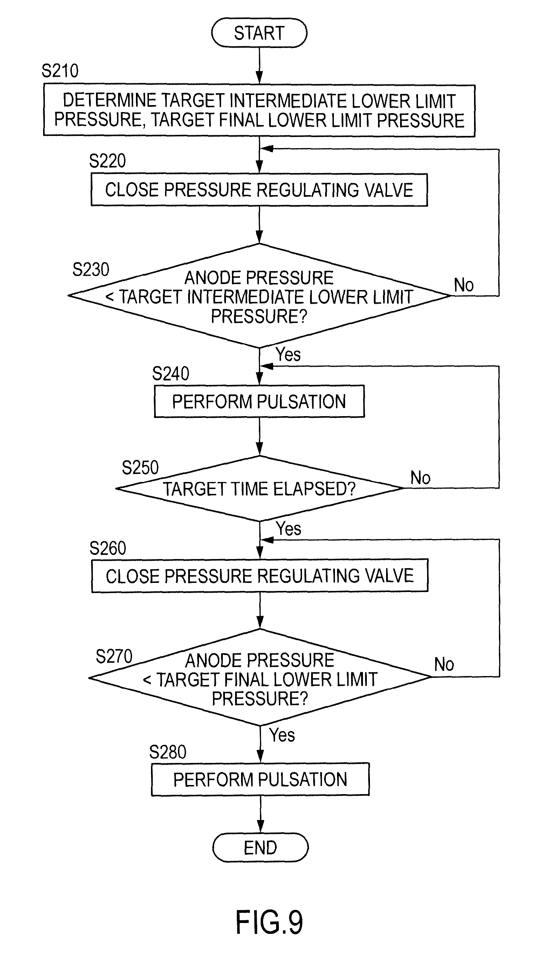

Fig. 9 is a flowchart of anode pressure control executed by the fuel cell system in the first embodiment. The controller 4 starts processing at Step S210 when the target anode pressure lowers as in the descending transition operation and the like.

At Step S210, the target final lower limit pressure is determined in accordance with the target output of the fuel cell stack 2, and the target intermediate lower limit pressure higher than the target final lower limit pressure is also determined. The target intermediate lower limit pressure is determined on the basis of the anode gas concentration in the buffer tank 36. That is, the higher the anode gas concentration in the buffer tank 36 is, the lower the target intermediate lower limit pressure is set. The anode gas concentration in the buffer tank 36 may be measured by providing a sensor or may be estimated on the basis of the anode pressure and the like.

At Step S220, the pressure regulating valve 33 is fully closed. Since the pressure regulating valve 33 is fully closed, the anode gas remaining in the anode gas channel 121 flows to the buffer tank 36 side by inertia and consumed. As a result, the anode pressure lowers.

At Step S230, it is determined whether or not the anode pressure detected by the pressure sensor 34 is lower than the target intermediate lower limit pressure. If it is determined that the anode pressure is equal to or higher than the target intermediate lower limit pressure, the routine returns to Step S220, while if it is determined that the anode pressure is lower than the target intermediate lower limit pressure, the routine proceeds to Step S240.

At Step S240, by using the target intermediate lower limit pressure as the lower limit pressure, the pulsation control for periodically increasing/decreasing the anode pressure is executed. As a result, supply of the anode gas is resumed.

At Step S250, it is determined whether or not a predetermined target time has elapsed since the pulsation control for periodically increasing/decreasing the anode pressure was started using the target intermediate lower limit pressure as the lower limit pressure. During this pulsation control, purge for discharging the anode off-gas containing nitrogen from the buffer tank 36 through the purge passage 37 is performed by adjusting the opening degree of the purge valve 38. By performing purge, the above described region in which the anode gas concentration is locally low is pushed out to the outside of the power generation region of the fuel cell stack 2. The predetermined target time is assumed to be time until the region in which the anode gas concentration is locally low is pushed out to the outside of the power generation region of the fuel cell stack 2 by performing purge. More preferably, the predetermined target time is assumed to be time until the region in which the anode gas concentration is locally low is pushed out to the buffer tank 36 by performing purge.

Here, the predetermined target time is determined on the basis of the anode gas concentration in the buffer tank 36. That is, the higher the anode gas concentration in the buffer tank 36 is, the longer the target time is set.

At Step S260, the pressure regulating valve 33 is fully closed. As a result, the anode pressure begins to lower again.

At Step S270, it is determined whether or not the anode pressure detected by the pressure sensor 34 is lower than the target final lower limit pressure. If it is determined that the anode pressure is equal to or higher than the target final lower limit pressure, the routine returns to Step S260, while if it is determined that the anode pressure is lower than the target final lower limit pressure, the routine proceeds to Step S280.

At step S280, the pulsation control for periodically increasing/decreasing the anode pressure using the target final lower limit pressure as the lower limit pressure is executed.

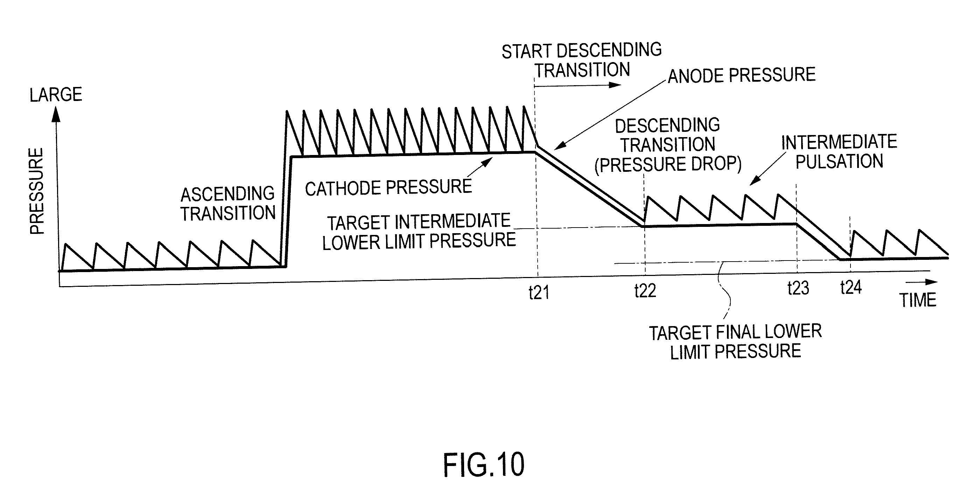

Fig. 10 is a diagram illustrating an example of a temporal change of the anode pressure and the cathode pressure when the anode pressure control is executed by the fuel cell system in the first embodiment. When the pressure regulating valve 33 is fully closed at time t21, and descending transition is started, the anode pressure lowers.

When the anode pressure lowers to the target intermediate lower limit pressure at time t22, the pulsation operation for periodically increasing/decreasing the anode pressure is started. Then, at time t23 when the predetermined target time has elapsed since the pulsation operation was started at the time t22, the pressure regulating valve 33 is fully closed again. As a result, the anode pressure begins to lower again.

When the anode pressure lowers to the target final lower limit pressure at time t24, the pulsation operation for periodically increasing/decreasing the anode pressure is started.

As described above, when the anode pressure is to be lowered to the target final lower limit pressure, the anode pressure is not lowered to the target final lower limit pressure without stopping but kept at the target intermediate lower limit pressure higher than the target final lower limit pressure for a predetermined period of time and then, lowered to the target final lower limit pressure. As a result, deterioration of the power generation efficiency caused by local lowering of the anode gas concentration in the anode gas channel can be suppressed.

As described above, according to the fuel cell system in the first embodiment that includes the buffer tank 36 storing the anode off-gas discharged from the fuel cell, in which the anode gas pressure becomes higher as the load becomes larger, and the anode gas pressure is pulsated at the same load, when the load lowers, the anode gas pressure is limited by a pressure higher than the anode gas pressure according to the load. As a result, since backflow of the anode gas with high impurity concentration present on the off-gas side can be suppressed, lowering of the anode gas concentration in the anode gas channel of the fuel cell stack can be suppressed. Particularly, by performing purge for discharging the anode off-gas containing nitrogen while the anode gas pressure is limited with the pressure higher than the anode gas pressure according to the load, the region in which the anode gas concentration is locally low is pushed out to the outside of the power generation region of the fuel cell stack 2, and thus, lowering of the anode gas concentration in the power generation region of the fuel cell stack 2 can be suppressed. As a result, deterioration of power generation efficiency of the fuel cell stack 2 can be suppressed.

Moreover, since the pressure when the anode gas pressure is limited is set on the basis of the anode gas concentration in the buffer tank 36, lowering of the anode gas concentration in the power generation region of the fuel cell stack 2 can be suppressed more appropriately.

Moreover, if the pressure of the anode gas lowers to the pressure higher than the anode gas pressure according to the load, the pulsation operation for periodically increasing/decreasing the pressure of the anode gas is performed for a predetermined period of time and thus, lowering of the anode gas concentration can be effectively suppressed by resuming supply of the anode gas and performing stable power generation.

Moreover, since the predetermined time is determined on the basis of the anode gas concentration in the buffer tank 36, lowering of the anode gas concentration in the power generation region of the fuel cell stack 2 can be suppressed more appropriately.

### - Second embodiment -

In the fuel cell system in the first embodiment, a pulsation width of the anode pressure when the pulsation operation is performed after lowering the anode pressure to the target intermediate lower limit pressure higher than the target final lower limit pressure is set constant. In a fuel cell system in a second embodiment, control is made such that the pulsation width of the anode pressure when the pulsation operation is performed after lowering the anode pressure to the target intermediate lower limit pressure is made small at first and then, gradually becomes larger with elapse of time.

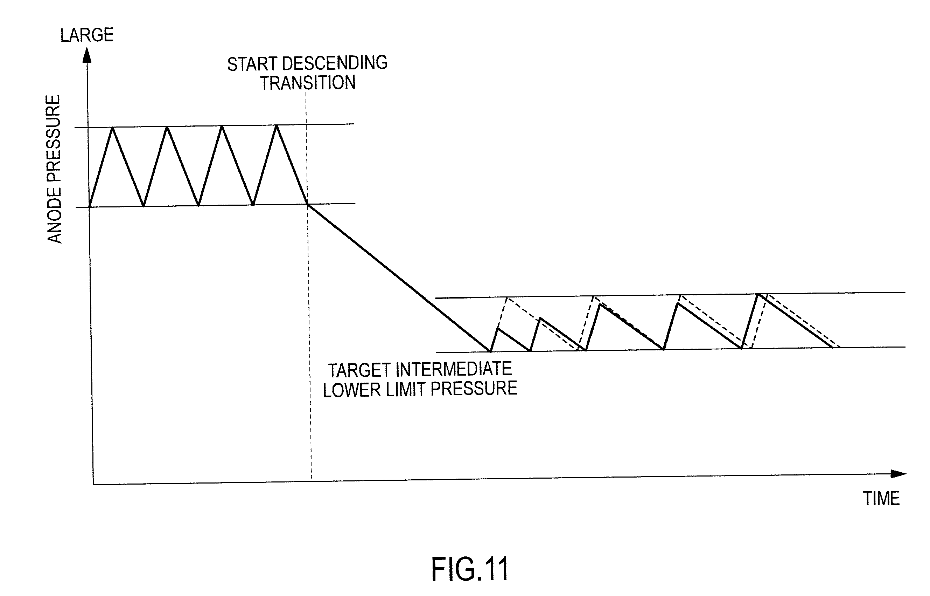

Fig. 11 is a diagram illustrating an example of a temporal change of the anode pressure when the anode pressure control is executed by the fuel cell system in the second embodiment. However, Fig. 11 illustrates that before the anode pressure is lowered to the target final lower limit pressure, the anode pressure is lowered to the target intermediate lower limit pressure, and the pulsation operation is performed, and a portion in which the anode pressure is lowered to the target final lower limit pressure is omitted.

As illustrated in Fig. 11, when the descending transition operation is started, the anode pressure is lowered to the target intermediate lower limit pressure. When the anode pressure is lowered to the target intermediate lower limit pressure, the pulsation operation for periodically increasing/decreasing the anode pressure is started, but as illustrated in Fig. 11, the pulsation width is made small at first, and then, the pulsation width is gradually made larger. In Fig. 11, the temporal change of the anode pressure in the second embodiment is indicated by a solid line, and the temporal change of the anode pressure in the first embodiment is indicated by a dotted line.

As described above, in the descending transition operation, the anode off-gas flows backward from the buffer tank 36 side to the anode gas channel 121, and a spot where the anode gas concentration is locally low is generated. By making the pulsation width small at first when the pulsation operation is started after lowering anode pressure to the target intermediate lower limit pressure as in this embodiment, a backflow amount of the anode off-gas from the buffer tank 36 side to the anode gas channel 121 can be reduced, and thus, lowering of the anode gas concentration during the pulsation operation can be further suppressed.

As described above, according to the fuel cell system in the second embodiment, when the pulsation operation is performed after the pressure of the anode gas is lowered to the second target pressure higher than the first target pressure, an increased/decreased pressure width of the anode gas at the start of the pulsation operation is made smaller than the increased/decreased pressure width of the anode gas at the end of the pulsation operation. As a result, since the backflow amount of the anode off-gas from the buffer tank 36 side to the anode gas channel 121 can be reduced during the pulsation operation, lowering of the anode gas concentration can be further suppressed.

The present invention is not limited to each of the above described embodiments. For example, the example in which the fuel cell system is mounted on a vehicle was described, but the present invention can be applied also to various systems other than the vehicle.

Moreover, the present invention is explained using the non-circulating type fuel cell system provided with the buffer tank as an example, but the present invention can be similarly applied even to a circulating-type fuel cell system as long as the pulsation control is executed, and the anode pressure is set to a low pressure at a low load and to a high pressure at a high load. In the circulating type fuel cell system, when a power generation request of the fuel cell system changes from a high load to a low load, that is, in the descending transition, the anode pressure is limited to the pressure higher than the pressure set in accordance with the load. At this time, inflow of the anode gas on the off-gas side with the impurity concentration raised by the pulsation operation into the anode channel in the stack can be suppressed, and even in the circulating type fuel cell system executing the pulsation control, the effect similar to this embodiment can be obtained.

This application claims priority based on Japanese Patent Application No. 2012-043879 filed with the Japan Patent Office on February 29, 2012, the entire contents of which are expressly incorporated herein by reference.

## Claims

1. A fuel cell system configured to generate power by supplying an anode gas and a cathode gas to a fuel cell, comprising:
a pressure regulating valve configured to control a pressure of the anode gas to be supplied to the fuel cell;
a pulsation operation control means configured to control such that the anode gas pressure becomes higher as a load becomes larger, and the anode gas pressure is pulsated at the same load; and
an anode gas pressure limiting means configured to limit the anode gas pressure by a pressure higher than the anode gas pressure according to the load when the load lowers.

2. The fuel cell system according to claim 1, further comprising:
an anode gas concentration obtaining means configured to obtain concentration of the anode gas in the buffer unit, wherein
the anode gas pressure limiting means sets the pressure when the anode gas pressure is limited on the basis of the concentration of the anode gas in the buffer unit.

3. The fuel cell system according to claim 1 or 2, wherein
the pulsation operation control means performs a pulsation operation to periodically increase/decrease the pressure of the anode gas for a predetermined time when the pressure of the anode gas lowers to the pressure higher than the anode gas pressure according to the load.

4. The fuel cell system according to claim 3, further comprising:
an anode gas concentration obtaining means configured to obtain concentration of the anode gas in the buffer unit; and
a predetermined time determining means configured to determine the predetermined time on the basis of the concentration of the anode gas in the buffer unit.

5. The fuel cell system according to claim 3, wherein
the pulsation operation control means makes an increase/decrease pressure width of the anode gas at start of the pulsation operation smaller than the increase/decrease pressure width of the anode gas at end of the pulsation operation when the pulsation operation is to be performed after the pressure of the anode gas is lowered to the pressure higher than the anode gas pressure according to the load.

6. A control method of a fuel cell system configured to generate power by supplying an anode gas and a cathode gas to a fuel cell, comprising:
controlling a pressure of the anode gas to be supplied to the fuel cell;
controlling such that the anode gas pressure becomes higher as the load becomes larger, and the anode gas pressure is pulsated at the same load; and
limiting the anode gas pressure by a pressure higher than the anode gas pressure according to the load when the load lowers.
